# EUROPÄISCHE PATENTSCHRIFT

(11) **EP 2 533 677 B1**
(45) Veröffentlichungstag und Bekanntmachung des Hinweises auf die Patenterteilung: **23.04.2014**
(21) Anmeldenummer: 11703433.0
(22) Anmeldetag: 04.02.2011
(51) Int. Cl.: A47L 9/20, B01D 46/00

(54) **KEHRMASCHINE**
POWER SWEEPER
BALAYEUSE

(30) Priorität: 08.02.2010 DE 102010001678
(43) Veröffentlichungstag der Anmeldung: 19.12.2012
(73) Patentinhaber: Alfred Kärcher GmbH & Co. KG, 71364 Winnenden (DE)
(72) Erfinder: SCHICK, Roland, 71549 Auenwald (DE); KRAL, Andreas, 73630 Remshalden (DE); KNEBEL, Peter, 73614 Schorndorf (DE); WELLER, Uwe, 71573 Allmersbach i. T. (DE); KOCHER, Nikolaus, 78056 Villingen-Schwenningen (DE); HAUG, Marcus, 71711 Steinheim an der Murr (DE)
(74) Vertreter: Hoeger, Stellrecht & Partner Patentanwälte
(86) Internationale Anmeldenummer: PCT/EP2011/051656
(87) Internationale Veröffentlichungsnummer: WO 2011/095591

(56) Entgegenhaltungen:
- WO-A1-97/00115
- US-A- 3 973 935
- US-A- 4 099 940

## Beschreibung

Die Erfindung betrifft eine Kehrmaschine mit einer drehend antreibbaren Kehrbürste und einem Kehrgutbehälter sowie mit einem Sauggebläse, das über einen Saugkanal und einen Absaugschacht mit der Kehrbürste in Strömungsverbindung steht zum Absaugen von staubhaltiger Luft, und mit mindestens einem Filter zum Abscheiden von Staub aus der abgesaugten Luft, wobei das mindestens eine Filter zur Abreinigung reinseitig über mindestens ein Fremdluftventil mit in einem Druckbehälter bevorrateter und unter Druck stehender Fremdluft beaufschlagbar ist.

Derartige Kehrmaschinen sind beispielsweise aus der DE 26 29 967 A1 bekannt. Mit ihrer Hilfe kann eine zu reinigende Bodenfläche gekehrt werden, wobei grobes Kehrgut mittels der drehend antreibbaren Kehrbürste in den Kehrgutbehälter überführt wird. Beim Kehren einer trockenen Bodenfläche kommt es häufig zu einer beträchtlichen Staubentwicklung. Um dieser entgegenzuwirken, weist die Kehrmaschine ein Sauggebläse auf, das über einen Saugkanal und einen Absaugschacht mit der Kehrbürste in Strömungsverbindung steht. Mit Hilfe des Sauggebläses kann staubhaltige Luft abgesaugt werden, so dass die Staubentwicklung beim Kehren der trockenen Bodenfläche gering gehalten wird. Die abgesaugte Luft durchströmt auf ihrem Weg von der Kehrbürste zum Sauggebläse ein Filter zum Abscheiden von Staub. Das Filter setzt sich im Laufe der Zeit zu und muss daher nach einiger Zeit abgereinigt werden. Hierzu weist die Kehrmaschine einen Druckbehälter auf, in dem unter Druck stehende Luft bevorratet wird und von dem aus die Luft über ein Fremdluftventil der Reinseite des Filters, also der dem Kehrgutbehälter abgewandten Seite des Filters, zugeführt werden kann. Die unter Druck stehende Fremdluft durchströmt das Filter entgegen der während des normalen Kehrbetriebs herrschenden Strömungsrichtung der angesaugten Luft. Dadurch wird das Filter abgereinigt.

Bei der aus der DE 26 29 967 A1 bekannten Kehrmaschine kommen eine Vielzahl von Filtern zum Einsatz, die jeweils in Form einer Filterpatrone ausgestaltet sind. Jeweils elf Filterpatronen ist ein Luftrohr zugeordnet, das oberhalb der Filterpatronen verläuft und im Wesentlichen in der Achse der Filterpatronen Öffnungen oder Düsen aufweist, über die die Filterpatronen mit Fremdluft beaufschlagt werden können. Die Fremdluft wird den Luftrohren aus einem Druckbehälter in Form eines Luftverteilerrohrs über ein Magnetventil zugeführt. Der Druck im Luftverteilerrohr beträgt mehr als 7 bar und jedes Magnetventil wird für einen Zeitraum von 0,1 Sekunden geöffnet. Dadurch wird jeweils elf Filterpatronen ein gemeinsamer Luftstrahl zugeführt, der durch das zugehörige Luftrohr strömt.

Als nachteilig hat es sich bei der aus DE 26 29 967 A1 bekannten Kehrmaschine erwiesen, dass eine wirkungsvolle Reinigung der Filter nur dann gewährleistet ist, wenn eine beträchtliche Menge an Fremdluft durch die Filter hindurchströmt. Diese große Menge an Fremdluft muss anschließend wieder vom Sauggebläse abgesaugt werden, und zwar innerhalb eines sehr kurzen Zeitraums, da ansonsten die Gefahr besteht, dass die Fremdluft über den Absaugschacht im Bereich der Kehrbürste aus der Kehrmaschine heraustritt. Dies würde die zu vermeidende Staubentwicklung vergrößern.

Aufgabe der vorliegenden Erfindung ist es, eine Kehrmaschine der eingangs genannten Art derart weiterzubilden, dass das mindestens eine Filter mit einer möglichst geringen Fremdluftmenge wirkungsvoll abgereinigt werden kann.

Diese Aufgabe wird bei einer Kehrmaschine der gattungsgemäßen Art erfindungsgemäß dadurch gelöst, dass der Druckbehälter eine Druckbehälterwand aufweist, die der Reinseite des mindestens einen Filters gegenüberliegt und an der das mindestens eine Fremdluftventil angeordnet ist, wobei sich zwischen der Druckbehälterwand und der Reinseite des Filters ein Abschnitt des Saugkanals erstreckt.

In die Erfindung fließt der Gedanke mit ein, dass durch Anordnung einer Druckbehälterwand, an der das mindestens eine Fremdluftventil positioniert ist, gegenüber der Reinseite des Filters letzteres beim kurzzeitigen Öffnen des Fremdluftventils mit einem Druckimpuls beaufschlagt werden kann, der zu einer mechanischen Abreinigung des Filters führt. Zwischen dem mindestens einen Fremdluftventil und dem mindestens einen Filter erstreckt sich lediglich ein Abschnitt des Saugkanals, so dass die unter Druck stehende Fremdluft ausgehend vom Druckbehälter über das Fremdluftventil und den Abschnitt des Saugkanals unmittelbar der Reinseite des Filters zugeführt werden kann. Dadurch kann ein starker Druckimpuls ausgeübt werden, ohne dass hierzu eine große Menge an Fremdluft erforderlich ist. Die Menge an Fremdluft, die das abzureinigende Filter entgegen der während des normalen Kehrbetriebs herrschenden Strömungsrichtung durchströmt, kann gering gehalten werden und dennoch kann ein beträchtlicher Druckimpuls erzeugt werden. Es besteht daher praktisch keine Gefahr, dass Fremdluft über den Absaugschacht aus der Kehrmaschine herausgeblasen wird.

Die Anordnung der Druckbehälterwand, an der das mindestens eine Fremdluftventil gehalten ist, unmittelbar gegenüber der Reinseite des abzureinigenden Filters hat darüber hinaus den Vorteil, dass der konstruktive Aufbau der Kehrmaschine vereinfacht wird. Luftzuführungsleitungen, über die die unter Druck stehende Fremdluft ausgehend vom Druckbehälter dem mindestens einen Filter zugeleitet wird, entfallen. Die erfindungsgemäße Kehrmaschine zeichnet sich somit auch durch einen vereinfachten konstruktiven Aufbau aus sowie durch eine sehr kompakte Bauform. Derartige Luftzuführungsleitungen haben darüber hinaus den Nachteil, dass sie einen Druckimpuls abschwächen, der sich beim Öffnen des Fremdluftventils ausbildet. Gemäß der Erfindung trifft der vom Fremdluftventil ausgehende Druckimpuls, nachdem er den zwischen dem Druckbehälter und dem mindestens einen Filter verlaufenden Saugkanal überquert hat, direkt auf das gegenüber dem Druckbehälter angeordnete Filter. Der Druckimpuls hat somit eine beachtliche Stärke, ohne dass eine große Menge an Fremdluft dem Druckbehälter entnommen werden muss.

Während der Abreinigung des mindestens einen Filters kann der Betrieb des Sauggebläses aufrechterhalten werden. Dies hat zur Folge, dass ein Teil der aus dem Druckbehälter austretenden und auf die Reinseite des abzureinigenden Filters auftreffenden Fremdluft noch im Saugkanal vom Sauggebläse abgesaugt wird. Nur ein Anteil der Fremdluft durchströmt das abzureinigende Filter, um anschließend vom Sauggebläse wieder eingesaugt zu werden.

Von besonderem Vorteil ist es, wenn die Druckbehälterwand, an der das mindestens eine Fremdluftventil angeordnet ist, eine Schachtwand des Saugkanals ausbildet. Der Saugkanal erstreckt sich von der Reinseite des mindestens einen Filters bis zum Sauggebläse. Ein sich an die Reinseite des Filters anschließender Abschnitt des Saugkanals kann einerseits vom Filter und andererseits von der dem Filter gegenüberliegenden Druckbehälterwand begrenzt werden. Der Abstand zwischen der Reinseite des Filters und der Druckbehälterwand kann hierbei sehr gering gehalten werden, er kann beispielsweise weniger als 10 cm betragen, insbesondere weniger als 7 cm.

Günstigerweise ist das mindestens eine Filter ein Flachfaltenfilter, das reinseitig eine Filterebene definiert, und die Druckbehälterwand, an der das mindestens eine Fremdluftventil angeordnet ist, erstreckt sich parallel zur Filterebene. Die parallele Anordnung hat zur Folge, dass der sich beim Öffnen des mindestens einen Fremdluftventils ausbildende Druckimpuls mit großer Intensität auf das Flachfaltenfilter trifft, dieses mechanisch erschüttert und dadurch abreinigt.

Die Druckbehälterwand, an der das mindestens eine Fremdluftventil angeordnet ist, bildet bei einer bevorzugten Ausgestaltung der Erfindung eine Bodenwand des Druckbehälters aus. Bei einer derartigen Ausgestaltung ist der Druckbehälter oberhalb des mindestens einen Filters der Kehrmaschine angeordnet, wobei zwischen dem Filter und dem Druckbehälter ein Abschnitt des Saugkanals verläuft.

Günstig ist es, wenn der Druckbehälter eine gewölbte Deckenwand aufweist, die mit der Bodenwand dicht verbunden ist. Die gewölbte Ausgestaltung der Deckenwand verleiht dieser eine hohe mechanische Belastbarkeit, ohne dass hierzu die Deckenwand eine große Materialstärke aufweisen muss.

Die Bodenwand ist bei einer bevorzugten Ausgestaltung aus Metall gefertigt in Form eines Bodenblechs. Alternativ kann vorgesehen sein, dass die Bodenwand aus Kunststoff gefertigt ist. Hierbei ist es von Vorteil, wenn die Bodenwand Verstärkungsrippen aufweist.

Die Verstärkungsrippen der Bodenwand sind günstigerweise an der Innenseite der Bodenwand angeordnet, also im Innenbereich des Druckbehälters.

Die Deckenwand ist günstigerweise aus einem Kunststoffmaterial gefertigt.

Von besonderem Vorteil ist es, wenn im Abstand zur Schmutzseite des mindestens einen Filters eine Prallwand angeordnet ist. Der beim kurzzeitigen Öffnen des mindestens einen Fremdluftventils entstehende Druckimpuls trifft, nachdem er das abzureinigende Filter passiert hat, im Abstand zur Schmutzseite des Filters auf die Prallwand und wird von dieser zumindest teilweise wieder in Richtung auf das abzureinigende Filter reflektiert. Dies unterstützt die Abreinigungswirkung des Druckimpulses. Darüber hinaus wird dadurch vermieden, dass der Druckimpuls über den Absaugschacht nach außen tritt.

Günstig ist es, wenn die Prallwand von einer Schachtwand des Absaugschachtes gebildet ist. Dies vereinfacht den konstruktiven Aufbau der Kehrmaschine und hat darüber hinaus den Vorteil, dass eine separate Prallwand entfallen kann, die mittels zusätzlicher Verbindungselemente festzulegen wäre.

Die im Druckbehälter bevorratete Luft steht unter Überdruck. Um zu vermeiden, dass sich innerhalb des Druckbehälters ein unzulässig hoher Überdruck ausbildet, ist der Druckbehälter günstigerweise mit einem Sicherheitsventil ausgestattet, das bei Überschreiten eines maximal zulässigen Überdrucks selbsttätig öffnet.

Von besonderem Vorteil ist es, wenn das mindestens eine Fremdluftventil als Sicherheitsventil ausgebildet ist, das bei Erreichen eines maximal zulässigen Überdruckes im Druckbehälter selbsttätig öffnet. Ein zusätzliches Sicherheitsventil kann dadurch entfallen. Das mindestens eine Fremdluftventil übernimmt bei einer derartigen Ausgestaltung zwei Funktionen. Zum einen ermöglicht es die kurzzeitige Bereitstellung eines Druckimpulses zur Abreinigung von mindestens einem Filter. Zum anderen begrenzt es den maximal zulässigen Druck im Druckbehälter. Übersteigt der Druck im Druckbehälter einen maximal zulässigen Wert, so geht das mindestens eine Fremdluftventil selbsttätig in seine Offenstellung über, so dass unter Druck stehende Luft aus dem Druckbehälter entweichen kann. Ein separates Sicherheitsventil kann somit entfallen.

Das mindestens eine Fremdluftventil ist bei einer bevorzugten Ausgestaltung der Erfindung als Magnetventil ausgestattet und umfasst einen Ventilteller, der von einem strombeaufschlagten Elektromagneten in einer Schließstellung gehalten ist. Der Elektromagnet kann mit einer elektrischen Steuereinheit verbunden sein, die in zeitlichen Abständen den Erregerstrom des Elektromagneten unterbricht. Der Ventilteller kann dann aufgrund des auf ihn einwirkenden Überdruckes selbsttätig in seine Offenstellung übergehen. Dadurch kann sich ein Druckimpuls ausbilden, der auf die Reinseite des Filters auftrifft. Nach einer kurzzeitigen Unterbrechung wird von der elektrischen Steuereinheit der Erregerstrom wieder bereitgestellt, so dass der Ventilteller wieder in seiner Schließstellung gehalten werden kann.

Von besonderem Vorteil ist es, wenn der Ventilteller mittels einer Schließfeder ausgehend von seiner Offenstellung in seine Schließstellung bewegt wird. Die Schließfeder kann zwischen der Druckbehälterwand und der Reinseite des Filters angeordnet sein.

Bevorzugt ist an der Reinseite des mindestens einen Filters ein Stützelement angeordnet, das das Filter während des normalen Saugbetriebs reinseitig abstützt. Die Schließfeder des Fremdluftventils kann zwischen dem Stützelement des Filters und dem Ventilteller des Fremdluftventils eingespannt sein.

Das Stützelement kann beispielsweise in Form eines Stützrostes ausgebildet sein, der die Reinseite des mindestens einen Filters überdeckt.

Der während des normalen Kehrbetriebs der Kehrmaschine herrschende Überdruck im Druckbehälter beträgt bei einer vorteilhaften Ausgestaltung der Erfindung maximal 1 bar. Der Überdruck ist somit verhältnismäßig gering. Aufgrund der Anordnung des mindestens einen Fremdluftventils an der der Reinseite des mindestens einen Filters gegenüberliegenden Druckbehälterwand kann trotz des verhältnismäßig geringen Überdruckes das mindestens eine Filter mit einem Druckimpuls beaufschlagt werden, der eine wirksame Abreinigung des Filters ermöglicht.

Die Bereitstellung eines Überdruckes von maximal 1 bar hat auch den Vorteil, dass die Ventilöffnung des mindestens einen Fremdluftventils verhältnismäßig großflächig ausgebildet werden kann. Die große Ventilöffnung wiederum stellt sicher, dass ein starker Druckimpuls erzeugt werden kann beim kurzzeitigen Öffnen des mindestens einen Fremdluftventils.

Vorzugsweise beträgt der während des normalen Kehrbetriebs der Kehrmaschine herrschende Überdruck im Druckbehälter maximal 500 mbar. Insbesondere kann vorgesehen sein, dass der Überdruck im Druckbehälter etwa 250 mbar bis ca. 350 mbar beträgt.

Bei einer vorteilhaften Ausführungsform der Erfindung umfasst die Kehrmaschine mehrere Fremdluftventile, die jeweils fluchtend zu einem Filter oder einem Filterabschnitt angeordnet sind. So kann beispielsweise vorgesehen sein, dass die Kehrmaschine fluchtend zu jedem Fremdluftventil ein gesondertes Filter aufweist, das durch Öffnen des zugeordneten Fremdluftventils abgereinigt werden kann. Es kann aber auch vorgesehen sein, dass verschiedenen Filterbereichen eines Filters der Kehrmaschine jeweils ein Fremdluftventil zugeordnet ist. Durch kurzzeitiges Öffnen des jeweiligen Fremdluftventils kann der zugeordnete Filterbereich abgereinigt werden.

Die Bereitstellung mehrerer Fremdluftventile, die jeweils fluchtend zu einem Filter oder einem Filterabschnitt angeordnet sind, hat den Vorteil, dass ein erstes Filter oder ein erster Filterabschnitt abgereinigt werden kann, während gleichzeitig über mindestens ein zweites Filter oder mindestens einen zweiten Filterabschnitt ein Saugbetrieb aufrechterhalten wird. Fremdluft, die beim Abreinigungsvorgang ein Filter oder einen Filterabschnitt durchströmt, kann über das andere Filter oder den anderen Filterabschnitt wieder vom Sauggebläse angesaugt werden, so dass keine Gefahr besteht, dass die Fremdluft über den Absaugschacht im Bereich der Kehrbürste nach außen tritt.

Besonders günstig ist es, wenn nach dem kurzzeitigen Öffnen eines ersten Fremdluftventils und dem damit verbundenen Abreinigungsvorgang zunächst sämtliche Fremdluftventile geschlossen werden, so dass sich ein normaler Saugbetrieb einstellt, und dass anschließend ein anderes Fremdluftventil kurzzeitig geöffnet wird, um dann wieder in seine Schließstellung überzugehen für einen weiteren, sich an den Filterabreinigungsvorgang anschließenden Saugbetrieb. Nach jedem Filterabreinigungsvorgang schließt sich somit ein normaler Saugbetrieb an. Dadurch ist sichergestellt, dass sämtliche Fremdluft vom Sauggebläse zuverlässig abgesaugt wird.

Das mindestens eine Filter ist günstigerweise auswechselbar. Hierbei ist es von Vorteil, wenn das mindestens eine Filter reinraumseitig auswechselbar ist. Das Filter kann bei einer derartigen Ausgestaltung vom Benutzer auf der Reinraumseite einer Filterhalterung entnommen werden. Die Gefahr, dass der Benutzer mit dem am Filter anhaftenden Staub in Berührung kommt, wird dadurch verringert.

Bei einer bevorzugten Ausgestaltung der erfindungsgemäßen Kehrmaschine ist der Druckbehälter in einem verschwenkbar gelagerten Deckelteil eines Gehäuses der Kehrmaschine angeordnet. Das Deckelteil kann zwischen einer Schließstellung, in der es auf einem Unterteil aufsitzt und den Saugkanal dicht verschließt, und einer Offenstellung, in der es den Saugkanal und das mindestens eine Filter reinraumseitig freigibt, hin- und hergeschwenkt werden. Dies erleichtert das Auswechseln des mindestens einen Filters und ermöglicht auch einen einfachen Zugang zu der Druckbehälterwand, an der das mindestens eine Fremdluftventil angeordnet ist.

Günstigerweise umfasst die Kehrmaschine eine Gehäusewand, die den Druckbehälter mit Ausnahme der das mindestens eine Fremdluftventil aufweisenden Druckbehälterwand umgibt. Dies ermöglicht eine beträchtliche Geräuschdämmung. Der Druckbehälter unterliegt während des Betriebs der Kehrmaschine fortlaufend Druckschwankungen, da über das mindestens eine Fremdluftventil in zeitlichen Abständen unter Druck gesetzte Luft entweichen kann. Diese Druckschwankungen führen zu einer Geräuschentwicklung. Dadurch, dass die Gehäusewand den Druckbehälter mit Ausnahme der die Fremdluftventile aufweisenden Druckbehälterwand umgibt, wird die Geräuschentwicklung gedämmt.

Die den Druckbehälter mit Ausnahme der das mindestens eine Fremdluftventil aufweisenden Druckbehälterwand umgebende Gehäusewand kann beispielsweise als Außenwand des Deckelteils ausgestaltet sein.

Das Deckelteil kann als Rotationsteil ausgestaltet sein, das heißt als Kunststoffteil, das im Rotationsformverfahren hergestellt ist.

Die nachfolgende Beschreibung einer bevorzugten Ausführungsform der Erfindung dient im Zusammenhang mit der Zeichnung der näheren Erläuterung. Es zeigen:
- Figur 1:: eine teilweise geschnittene Seitenansicht einer erfindungsgemäßen Kehrmaschine;
- Figur 2:: eine vergrößerte Schnittansicht im Bereich eines Deckelteils der Kehrmaschine, wobei das Deckelteil eine Schließstellung einnimmt;
- Figur 3:: eine Schnittansicht entsprechend Figur 2, wobei das Deckelteil eine Offenstellung einnimmt und
- Figur 4:: eine Schnittansicht längs der Linie 4-4 in Figur 2.

In der Zeichnung ist schematisch eine erfindungsgemäße Kehrmaschine 10 dargestellt mit einem Fahrgestell 12 und einem Fahrersitz 14 sowie einem Gehäuse 16, in dem ein Sauggebläse 18 angeordnet ist und an dessen Unterseite eine um eine horizontale Drehachse 20 drehend antreibbare Kehrbürste in Form einer Kehrwalze 22 gelagert ist. Der Antrieb der Kehrwalze 22 erfolgt mit Hilfe eines an sich bekannten Motors, der in der Zeichnung nicht dargestellt ist. Hierbei kann es sich beispielsweise um einen Verbrennungsmotor oder auch um einen Elektromotor handeln. Der Motor kann gleichzeitig einen Fahrantrieb für die fahrbare Kehrmaschine 10 ausbilden.

Zusätzlich zur Kehrwalze 22 umfasst die Kehrmaschine 10 zwei Tellerbürsten 24, 26, die unterhalb des Fahrgestells 12 angeordnet sind und ebenfalls zu einer Drehbewegung angetrieben werden können, wobei deren Drehachse im Wesentlichen vertikal verläuft.

Das Gehäuse 16 der Kehrmaschine 10 umfasst einen Kehrgutbehälter 28, der an einem Gehäuseunterteil 30 lösbar gehalten ist und grobes Kehrgut aufnimmt, das mit Hilfe der Kehrwalze 22 von einer zu reinigenden Bodenfläche aufgenommen wird.

Innerhalb des Gehäuseunterteils 30 verläuft ein Absaugschacht 32, der von der Kehrwalze 22 ausgeht und sich bis zu einer Absaugöffnung 34 des Gehäuseunterteils 30 erstreckt, an der eine Halteplatte 36 angeordnet ist. Die Halteplatte 36 weist insgesamt drei Saugöffnungen 38, 40 und 42 auf, an denen jeweils ein Filter in Form eines Flachfaltenfilters gehalten ist. Die Flachfaltenfilter 44, 46, 48 sind jeweils identisch ausgebildet.

Im Bereich zwischen den Filtern 44, 46, 48 und dem Fahrersitz 14 nimmt das Gehäuseunterteil 30 das Sauggebläse 18 auf. Diese steht über einen Saugkanal 52 mit den dem Absaugschacht 32 abgewandten Reinseiten 54 der Filter 44, 46, 48 in Strömungsverbindung. Über einen Auslasskanal 56 kann Saugluft, die von dem Sauggebläse 18 angesaugt wird, an die Umgebung abgegeben werden.

Zwischen dem Absaugschacht 32 und dem Saugkanal 52 verläuft eine Trennwand 58, die eine Schachtwand des Absaugschachtes 32 ausbildet und im Abstand zu der dem Absaugschacht 32 zugewandten Schmutzseite 60 der Filter 44, 46, 48 in Form einer Prallwand 62 ausgestaltet ist.

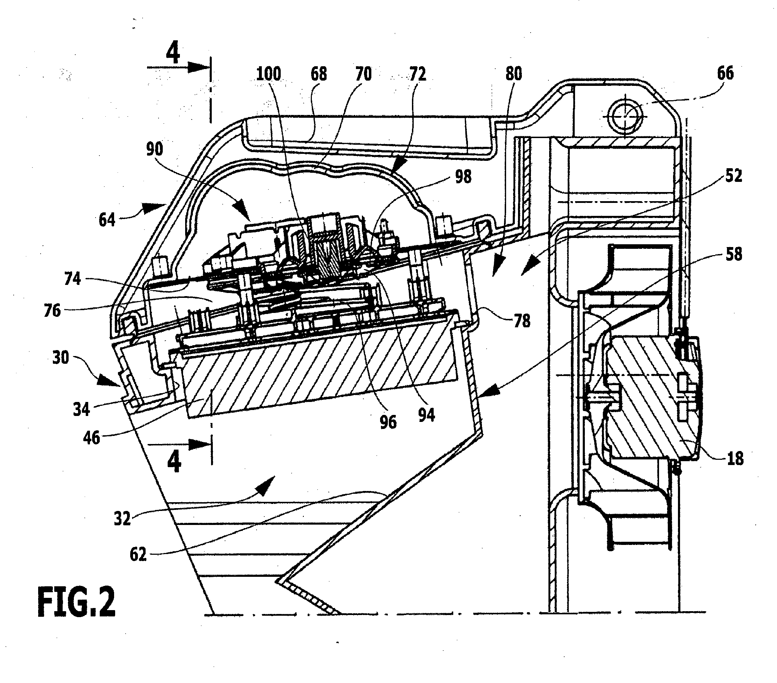

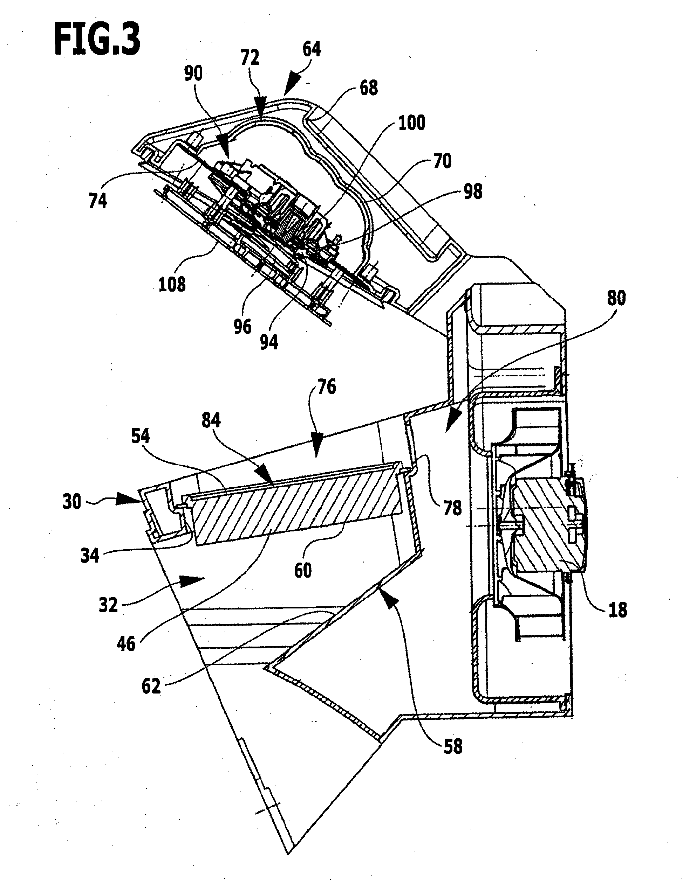

Oberseitig ist an das Gehäuseunterteil 30 der Kehrmaschine 10 ein Deckelteil 64 angelenkt, das um eine Schwenkachse 66 verschwenkbar ist zwischen der in Figur 2 dargestellten Schließstellung und der in Figur 3 dargestellten Offenstellung. Das Deckelteil 64 umfasst eine Außenwand 68, die eine gewölbte Deckenwand 70 eines Druckbehälters 72 übergreift. Die Deckenwand 70 ist aus Kunststoff gefertigt und mit einer ebenen Bodenwand 74 unter Zwischenlage eines in der Zeichnung nicht dargestellten Dichtelementes verschraubt. Die Bodenwand 74 ist gegenüber der Reinseite 54 der Filter 44, 46, 48 angeordnet und begrenzt in der Schließstellung des Deckelteils 64 die Oberseite eines ersten Saugkanalabschnitts 76, der sich ausgehend von der Reinseite 54 der Filter 44, 46, 48 bis zu einem Durchlass 78 der Trennwand 58 erstreckt. An den Durchlass 78 schließt sich in Richtung des Sauggebläses 50 ein zweiter Saugkanalabschnitt 80 an.

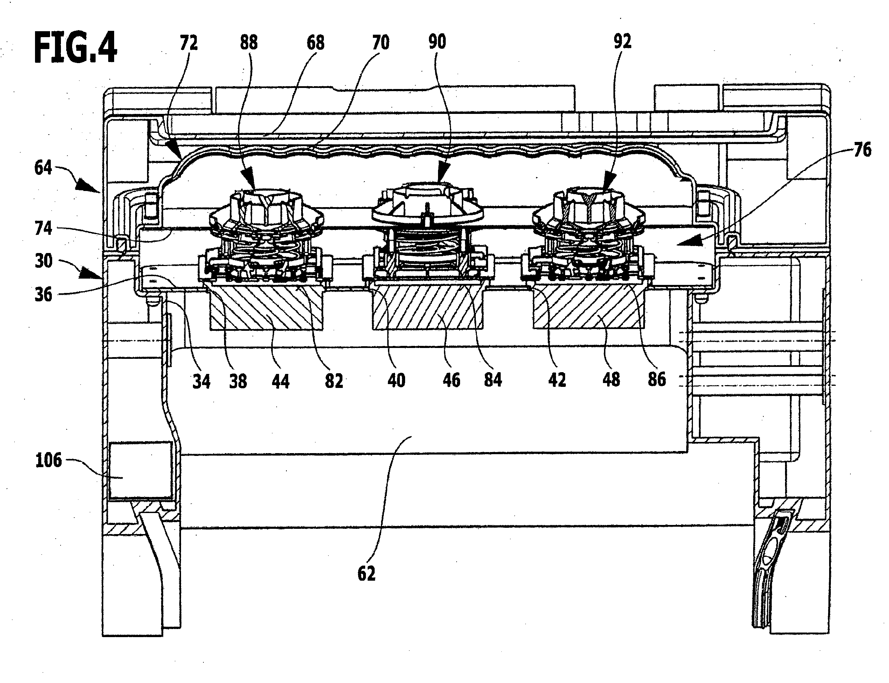

Die Flachfaltenfilter 44, 46, 48 definieren im ersten Saugkanalabschnitt 76 reinseitig jeweils eine Filterebene 82, 84, 86. Die Bodenwand 74 des Druckbehälters 72 ist parallel zu den Filterebenen 82, 84, 86 angeordnet. Dies wird insbesondere aus Figur 4 deutlich. Die Bodenwand 74 verläuft somit auch parallel und in verhältnismäßig geringem Abstand zur Halteplatte 36. Vorzugsweise ist der Abstand maximal so groß wie der Durchmesser des nachstehend erläuterten Ventilteller 94.

Unmittelbar gegenüber den Reinseiten 54 der Filter 44, 46, 48 ist an der Bodenwand 74 jeweils ein Fremdluftventil 88, 90, 92 angeordnet, über das unter Druck stehende Fremdluft ausgehend aus dem Druckbehälter 72 abgegeben werden kann.

Die Fremdluftventile 88, 90 und 92 sind identisch ausgebildet. Sie weisen jeweils einen Ventilteller 94 auf, der von einer spiralförmigen Schließfeder 96 in Richtung einer Schließstellung gedrückt wird, in der er eine Fremdluftöffnung 98 in der Bodenwand 74 dicht verschließt. In der Schließstellung des Ventiltellers 94 ist die Schließfeder 96 entspannt. Gespannt wird die Schließfeder 96, wenn der Ventilteller 94 von seiner Schließstellung in seine Offenstellung übergeht. In seiner Schließstellung gehalten wird der Ventilteller 94 von einem Elektromagneten 100. Der Elektromagnet 100 wird hierzu von einer an sich bekannten und deshalb in der Zeichnung nicht dargestellten elektrischen Steuereinheit der Kehrmaschine 10 mit einem Erregerstrom beaufschlagt. Bei einer Unterbrechung des Erregerstroms wird der Ventilteller 94 aufgrund des auf ihn einwirkenden Überdruckes der im Druckbehälter 72 bevorrateten Luft selbsttätig in eine Offenstellung überführt, in der er einen Abstand zur Fremdluftöffnung 98 einnimmt, so dass Fremdluft aus dem Druckbehälter 72 ausströmen kann. Die Schließfeder 96 führt den Ventilteller 94 anschließend wieder zurück in seine Schließstellung, in der er dann unter der Wirkung des wieder mit Strom beaufschlagten Elektromagneten 100 gehalten wird.

Durch kurzzeitige Unterbrechung des Erregerstroms des Elektromagneten 100 können somit die Fremdluftventile 88, 90 und 92 nacheinander kurzzeitig geöffnet werden, so dass unter Druck stehende Luft aus dem Druckbehälter 72 entweichen kann.

Beim Öffnen der Fremdluftventile 88, 90 und 92 bildet sich jeweils ein Druckimpuls aus. Da die Fremdluftventile 88, 90 und 92 jeweils fluchtend zu einem Flachfaltenfilter 44, 46 bzw. 48 angeordnet sind und die aus dem Druckbehälter 72 austretende Fremdluft direkt auf die Reinseite 54 des jeweiligen Flachfaltenfilters 44, 46 bzw. 48 auftrifft, wird das jeweilige Flachfaltenfilter 44, 46 bzw. 48 vom Druckimpuls mechanisch erschüttert und dadurch abgereinigt und gleichzeitig durchströmt ein Teil der Fremdluft das Flachfaltenfilter 44, 46 bzw. 48 entgegen der während des normalen Kehrbetriebs der Kehrmaschine 10 herrschenden Saugströmung. Dadurch wird die Filterabreinigung verstärkt. Der Druckimpuls trifft anschließend auf die im Abstand zur Schmutzseite 60 der Flachfaltenfilter 44, 46, 48 angeordnete Prallwand 62 und wird von dieser zurück zum Filter reflektiert.

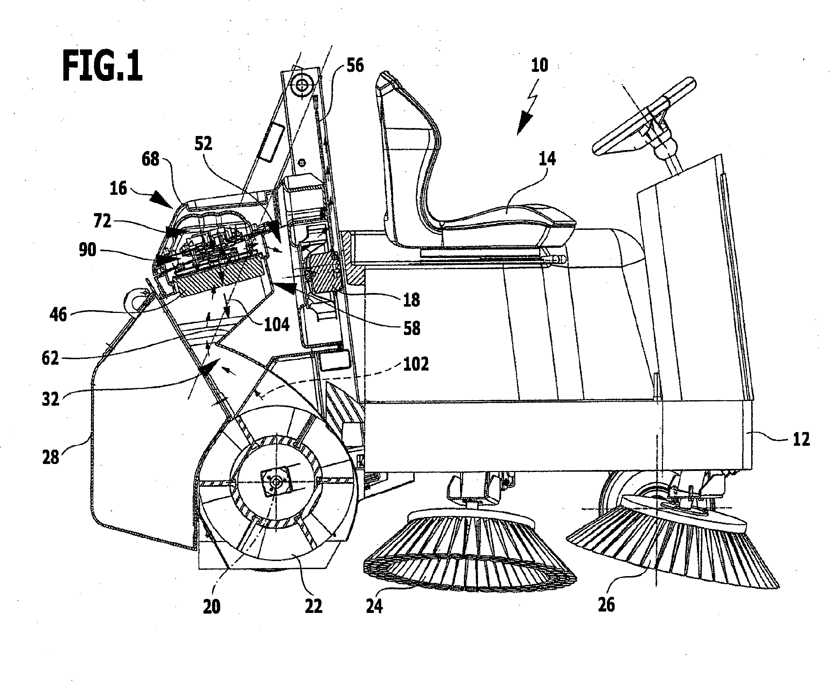

Während des normalen Kehrbetriebs wird, wie voranstehend erläutert, die Kehrwalze 22 drehend angetrieben und gleichzeitig wird staubhaltige Luft vom Sauggebläse 50 über den Absaugschacht 32, die Flachfaltenfilter 44, 46, 48 und den Saugkanal 52 abgesaugt. Die sich ausbildende Saugströmung ist in Figur 1 durch die Pfeile 102 veranschaulicht. Grobes Kehrgut wird von der Kehrwalze 22 in den Kehrgutbehälter 28 überführt, und die abgesaugte Luft wird von den Filtern 44, 46, 48 von Staub befreit. Ein Großteil des Staubs setzt sich an der Schmutzseite 60 der Filter 44, 46 ab. Dadurch verringert sich die Luftdurchlässigkeit der Filter 44, 46, 48 und die Saugwirkung des Sauggebläses 50 innerhalb des Absaugschachtes 32 wird zunehmend verringert.

In regelmäßigen Zeitabständen erfolgt deshalb eine Abreinigung der Filter 44, 46, 48. Hierbei wird jeweils eines der Filter 44, 46 bzw. 48 abgereinigt und gleichzeitig wird über die anderen Filter ein Saugbetrieb aufrechterhalten. Zur Filterabreinigung wird das dem abzureinigenden Filter fluchtend gegenüberliegende Fremdluftventil 88, 90 bzw. 92 kurzzeitig geöffnet, indem der Erregerstrom des Elektromagneten 100 unterbrochen wird. Unter Druck stehende Luft, die im Druckbehälter 72 bevorratet wird, trifft dadurch schlagartig auf die Reinseite 54 des abzureinigenden Filters. Es bildet sich hierbei ein beträchtlicher Druckimpuls auf, der das abzureinigende Filter mechanisch erschüttert. Ein Teil der aus dem Druckbehälter 72 entweichenden Druckluft durchströmt das abzureinigende Filter entgegen der während des normalen Saugbetriebs herrschenden Strömungsrichtung 102 und wird über die benachbarten Filter wieder abgesaugt. Die sich während der Filterabreinigung ausbildende Fremdluftströmung ist in Figur 1 durch die Pfeile 104 veranschaulicht.

Der während des Kehrbetriebs herrschende Überdruck innerhalb des Druckbehälters 72 beträgt weniger als 1 bar, insbesondere weniger als 0,5 bar. Zur Bereitstellung der unter Druck stehenden Luft weist die Kehrmaschine 10 einen Kompressor 106 auf, der über eine an sich bekannte und deshalb in der Zeichnung zur Erzielung einer besseren Übersicht nicht dargestellte Druckleitung mit dem Druckbehälter 72 in Strömungsverbindung steht. Der Kompressor 106 wird in zeitlichen Abständen in Gang gesetzt, um innerhalb des Druckbehälters 72 einen Überdruck von 280 mbar bis 330 mbar bereitzustellen. Der Druckbehälter 72 weist hierbei ein Volumen von weniger als 10 Liter auf, beispielsweise ein Volumen von 6 bis 8 Liter, insbesondere 7 Liter.

Die Abreinigung der Filter 44, 46, 48 erfolgt nacheinander, wobei zwischen zwei Filterabreinigungen jeweils ein normaler Saugbetrieb sichergestellt wird, indem sämtliche Fremdluftventile 88, 90, 92 geschlossen sind.

Die Fremdluftventile 88, 90 und 92 haben nicht nur die Funktion, die jeweils zugeordneten Filter 44, 46 bzw. 48 zur Abreinigung mit einem Druckimpuls zu beaufschlagen, sondern sie dienen zusätzlich auch als Sicherheitsventile, mit denen sichergestellt ist, dass sich innerhalb des Druckbehälters 72 kein unzulässig hoher Überdruck ausbildet. Sollte beispielsweise aufgrund einer Fehlfunktion des Kompressors 106 der innerhalb des Druckbehälters 72 herrschende Druck einen vorgegebenen Maximaldruck überschreiten, so gehen die Fremdluftventile 88, 90, 92 selbsttätig in ihre Offenstellung über. Hierzu ist die von den Elektromagneten 100 auf die Ventilteller 94 ausgeübte magnetische Haltekraft derart vorgegeben, dass bei Überschreiten eines maximal zulässigen Überdruckes im Druckbehälter 72 die aufgrund des herrschenden Überdrucks die auf die Ventilteller 94 einwirkende Druckkraft die magnetische Haltekraft übersteigt. Die Fremdluftventile 88, 90, 92 übernehmen somit auch die Funktion eines Sicherheitsventils für den Druckbehälter 72. Ein zusätzliches Sicherheitsventil kann entfallen.

Die Filter 44, 46, 48 sind an der Halteplatte 36 auswechselbar gehalten. Zum Auswechseln kann das Deckelteil 64 des Gehäuses 16 der Kehrmaschine 10 in seine in Figur 3 dargestellte Offenstellung verschwenkt werden. Die Filter 44, 46, 48 sind dann reinraumseitig unmittelbar zugängig und können der Halteplatte 36 entnommen werden.

Aus Figur 3 wird deutlich, dass an der Außenseite der Bodenwand 74 jeweils fluchtend zu einem Filter 44, 46, 48 ein Stützelement in Form eines Stützrosts 108 angeordnet ist, der in der Schließstellung des Deckelteils 64 auf der Reinseite 54 der Filter 44, 46, 48 aufsitzt. Die Filter 44, 46, 48 werden während des normalen Kehrbetriebs der Kehrmaschine 10 vom jeweiligen Stützrost 108 reinseitig abgestützt. Zwischen dem Stützrost 108 und dem Ventilteller 94 ist jeweils eine Schließfeder 96 eingespannt. Diese ist somit in der Offenstellung des Deckelteils 64 dem Benutzer auf einfache Weise zugänglich.

Aus dem Voranstehenden wird deutlich, dass die Kehrmaschine 10 einen konstruktiv einfachen Aufbau aufweist, wobei durch Bereitstellung eines verhältnismäßig geringen Überdruckes von etwa 300 mbar im Druckbehälter 72 wirkungsvoll eine Filterabreinigung erzielt werden kann. Dies ermöglicht den Einsatz relativ kleiner Filter 44, 46, 48 sowie eines Sauggebläses 50 mit verhältnismäßig geringer elektrischer Leistung. Trotz des Einsatzes der eher kleinen Filter 44, 46, 48 kann vom Sauggebläse 50 ein dauerhafter Unterdruck im Absaugschacht 32 sichergestellt werden, so dass die Staubentwicklung beim Betrieb der Kehrmaschine 10 gering gehalten werden kann. Hierbei ist sichergestellt, dass bei der Abreinigung der Filter keine Fremdluft über den Absaugschacht 32 nach außen tritt. Die Abreinigung erfolgt mit einer verhältnismäßig geringen Menge an Fremdluft, es wird allerdings ein beträchtlicher Druckimpuls erzeugt, der die Abreinigung der Filter 44, 46, 48 sicherstellt.

## Patentansprüche

1. Kehrmaschine mit einer drehend antreibbaren Kehrbürste und einem Kehrgutbehälter sowie mit einem Sauggebläse, das über einen Saugkanal und einen Absaugschacht mit der Kehrbürste in Strömungsverbindung steht zum Absaugen von staubhaltiger Luft, und mit mindestens einem Filter zum Abscheiden von Staub aus der abgesaugten Luft, wobei das mindestens eine Filter zur Abreinigung reinseitig über mindestens ein Fremdluftventil mit in einem Druckbehälter bevorrateter und unter Druck stehender Fremdluft beaufschlagbar ist, **dadurch gekennzeichnet, dass** der Druckbehälter (72) eine Druckbehälterwand (74) aufweist, die der Reinseite (54) des mindestens einen Filters (44, 46, 48) gegenüberliegt und an der das mindestens eine Fremdluftventil (88, 90, 92) angeordnet ist, wobei sich zwischen der Druckbehälterwand (74) und der Reinseite (54) des mindestens einen Filters (44, 46, 48) ein Abschnitt (76) des Saugkanals (52) erstreckt.

2. Kehrmaschine nach Anspruch 1, **dadurch gekennzeichnet, dass** die das mindestens eine Fremdluftventil (88, 90, 92) aufweisende Druckbehälterwand (74) eine Schachtwand des Saugkanals (52) ausbildet.

3. Kehrmaschine nach Anspruch 1 oder 2, **dadurch gekennzeichnet, dass** das mindestens eine Filter ein Flachfaltenfilter (44, 46, 48) ist, das reinseitig eine Filterebene (82, 84, 86) definiert, und dass die Druckbehälterwand (74) parallel zur Filterebene (82, 84, 86) ausgerichtet ist.

4. Kehrmaschine nach einem der voranstehenden Ansprüche, **dadurch gekennzeichnet, dass** die Druckbehälterwand eine Bodenwand (74) des Druckbehälters (72) ausbildet.

5. Kehrmaschine nach Anspruch 4, **dadurch gekennzeichnet, dass** der Druckbehälter (72) eine gewölbte Deckenwand (70) aufweist, die mit der Bodenwand (74) dicht verbunden ist.

6. Kehrmaschine nach Anspruch 4 oder 5, **dadurch gekennzeichnet, dass** die Bodenwand (74) aus Metall oder aus einem Kunststoffmaterial gefertigt ist.

7. Kehrmaschine nach Anspruch 4, 5 oder 6, **dadurch gekennzeichnet, dass** die Deckenwand (70) aus einem Kunststoffmaterial gefertigt ist.

8. Kehrmaschine nach einem der voranstehenden Ansprüche, **dadurch gekennzeichnet, dass** im Abstand zur Schmutzseite (60) des mindestens einen Filters (44, 46, 48) eine Prallwand (62) angeordnet ist.

9. Kehrmaschine nach Anspruch 8, **dadurch gekennzeichnet, dass** die Prallwand (62) eine Schachtwand des Absaugschachtes (32) ist.

10. Kehrmaschine nach einem der voranstehenden Ansprüche, **dadurch gekennzeichnet, dass** das mindestens eine Fremdluftventil (88, 90, 92) ein Sicherheitsventil ist, das bei Überschreiten eines maximal zulässigen Überdruckes im Druckbehälter (72) öffnet.

11. Kehrmaschine nach einem der voranstehenden Ansprüche, **dadurch gekennzeichnet, dass** das mindestens eine Fremdluftventil (88, 90, 92) ein Magnetventil ist mit einem Ventilteller (94), der von einem strombeaufschlagten Elektromagneten (100) in einer Schließstellung gehalten ist.

12. Kehrmaschine nach einem der voranstehenden Ansprüche, **dadurch gekennzeichnet, dass** der Überdruck im Druckbehälter (72) maximal 1 bar beträgt.

13. Kehrmaschine nach Anspruch 12, **dadurch gekennzeichnet, dass** der Überdruck im Druckbehälter (72) maximal 500 mbar beträgt.

14. Kehrmaschine nach einem der voranstehenden Ansprüche, **dadurch gekennzeichnet, dass** die Kehrmaschine (10) mehrere Fremdluftventile (88, 90, 92) aufweist, die jeweils fluchtend zu einem Filter (44, 46, 48) oder einem Filterabschnitt angeordnet sind.

15. Kehrmaschine nach einem der voranstehenden Ansprüche, **dadurch gekennzeichnet, dass** das mindestens eine Filter (44, 46, 48) reinraumseitig auswechselbar ist.

16. Kehrmaschine nach einem der voranstehenden Ansprüche, **dadurch gekennzeichnet, dass** der Druckbehälter (72) in einem verschwenkbar gelagerten Deckelteil (64) eines Gehäuses (16) der Kehrmaschine (10) angeordnet ist.

17. Kehrmaschine nach einem der voranstehenden Ansprüche, **dadurch gekennzeichnet, dass** der Druckbehälter (72) mit Ausnahme der das mindestens eine Fremdluftventil (88, 90, 92) aufweisenden Druckbehälterwand (74) von einer Gehäusewand (68) der Kehrmaschine (10) umgeben ist.

## Claims

1. Road sweeper with a rotatingly drivable sweeping brush and a sweepings container as well as a suction blower in flow communication with the sweeping brush via a suction conduit and an intake duct for the purpose of taking in dust-containing air, and with at least one filter for separating dust from the air drawn in, wherein the at least one filter can be acted upon on the clean side with external air subject to pressure and stored in a pressure container via at least one external air valve for the purpose of cleaning, **characterized in that** the pressure container (72) has a pressure container wall (74) which is located opposite the clean side (54) of the at least one filter (44, 46, 48) and on which the at least one external air valve (88, 90, 92) is arranged, a section (76) of the suction conduit (52) extending between the pressure container wall (74) and the clean side (54) of the at least one filter (44, 46, 48).

2. Road sweeper in accordance with claim 1, **characterized in that** the pressure container wall (74) having the at least one external air valve (88, 90, 92) forms a duct wall of the suction conduit (52).

3. Road sweeper in accordance with claim 1 or 2, **characterized in that** the at least one filter is a flat-fold filter (44, 46, 48) defining a filter plane (82, 84, 86) on the clean side, and **in that** the pressure container wall (74) is aligned parallel to the filter plane (82, 84, 86).

4. Road sweeper in accordance with any one of the preceding claims, **characterized in that** the pressure container wall forms a bottom wall (74) of the pressure container (72).

5. Road sweeper in accordance with claim 4, **characterized in that** the pressure container (72) has a curved cover wall (70) sealingly connected to the bottom wall (74).

6. Road sweeper in accordance with claim 4 or 5, **characterized in that** the bottom wall (74) is produced from metal or from a plastic material.

7. Road sweeper in accordance with claim 4, 5 or 6, **characterized in that** the cover wall (70) is produced from a plastic material.

8. Road sweeper in accordance with any one of the preceding claims, **characterized in that** a baffle wall (62) is arranged at a distance from the dirt side (60) of the at least one filter (44, 46, 48).

9. Road sweeper in accordance with claim 8, **characterized in that** the baffle wall (62) is a duct wall of the intake duct (32).

10. Road sweeper in accordance with any one of the preceding claims, **characterized in that** the at least one external air valve (88, 90, 92) is a safety valve opening when a maximum admissible overpressure in the pressure container (72) is exceeded.

11. Road sweeper in accordance with any one of the preceding claims, **characterized in that** the at least one external air valve (88, 90, 92) is a magnetic valve with a valve plate (94) held in a closed position by an electromagnet (100) acted upon by a current.

12. Road sweeper in accordance with any one of the preceding claims, **characterized in that** the overpressure in the pressure container (72) is at the most 1 bar.

13. Road sweeper in accordance with claim 12, **characterized in that** the overpressure in the pressure container (72) is at the most 500 mbar.

14. Road sweeper in accordance with any one of the preceding claims, **characterized in that** the road sweeper (10) has several external air valves (88, 90, 92) each arranged in alignment with a filter (44, 46, 48) or a filter section.

15. Road sweeper in accordance with any one of the preceding claims, **characterized in that** the at least one filter (44, 46, 48) is replaceable on the clean chamber side.

16. Road sweeper in accordance with any one of the preceding claims, **characterized in that** the pressure container (72) is arranged in a pivotally mounted cover part (64) of a housing (16) of the road sweeper (10).

17. Road sweeper in accordance with any one of the preceding claims, **characterized in that** the pressure container (72) is surrounded by a housing wall (68) of the road sweeper (10) with the exception of the pressure container wall (74) having the at least one external air valve (88, 90, 92).

## Revendications

1. Balayeuse pourvue d'une brosse de balayage pouvant être entraînée en rotation et d'un bac à déchets, ainsi que d'un ventilateur aspirant qui est en relation d'écoulement avec la brosse de balayage par l'intermédiaire d'un canal d'aspiration et d'une cheminée d'aspiration, pour l'aspiration de l'air chargé de poussière, et d'au moins un filtre destiné à séparer la poussière de l'air aspiré, le ou les filtres étant soumis pour le nettoyage, côté propre, par le biais d'au moins une soupape d'air extérieur, à l'air extérieur sous pression accumulé dans un récipient sous pression, **caractérisée en ce que** le récipient sous pression (72) présente une paroi (74) qui est opposée au côté propre (54) du ou des filtres (44, 46, 48) et sur laquelle sont disposées la ou les soupapes d'air extérieur (88, 90, 92), une partie (76) du canal d'aspiration (52) s'étendant entre la paroi (74) du récipient sous pression et le côté propre (54) du ou des filtres (44, 46, 48).

2. Balayeuse selon la revendication 1, **caractérisée en ce que** la paroi (74) du récipient sous pression comprenant la ou les soupapes d'air extérieur (88, 90, 92) forment une paroi du canal d'aspiration (52).

3. Balayeuse selon la revendication 1 ou 2, **caractérisée en ce que** le ou les filtres sont un filtre plissé plat (44, 46, 48) qui définit côté propre un plan de filtre (82, 84, 86), et **en ce que** la paroi (74) du récipient sous pression est orientée parallèlement au plan de filtre (82, 84, 86).

4. Balayeuse selon l'une quelconque des revendications précédentes, **caractérisée en ce que** la paroi du récipient sous pression forme une paroi inférieure (74) du récipient sous pression (72).

5. Balayeuse selon la revendication 4, **caractérisé en ce que** le récipient sous pression (72) comprend une paroi inférieure (70) courbée reliée de manière étanche à la paroi inférieure (74).

6. Balayeuse selon la revendication 4 ou 5, **caractérisée en ce que** la paroi inférieure (74) est constituée de métal ou de matière plastique.

7. Balayeuse selon la revendication 4, 5 ou 6, **caractérisée en ce que** la paroi inférieure (70) est constituée de matière plastique.

8. Balayeuse selon l'une quelconque des revendications précédentes, **caractérisée en ce qu'**une paroi d'impact (62) est disposée à une certaine distance du côté sale (60) du ou des filtres (44, 46, 48).

9. Balayeuse selon la revendication 8, **caractérisée en ce que** la paroi d'impact (62) est une paroi de la cheminée d'aspiration (32).

10. Balayeuse selon l'une quelconque des revendications précédentes, **caractérisée en ce que** la ou les soupapes d'air extérieur (88, 90, 92) sont une soupape de sûreté qui s'ouvre lorsqu'une surpression admissible maximale dans le récipient sous pression (72) est dépassée.

11. Balayeuse selon l'une quelconque des revendications précédentes, **caractérisée en ce que** la ou les soupapes d'air extérieur (88, 90, 92) sont une électrovanne pourvue d'une tête (94) qui est retenue dans une position de fermeture par un électroaimant (100) exposé à un courant.

12. Balayeuse selon l'une quelconque des revendications précédentes, **caractérisée en ce que** la surpression dans le récipient sous pression (72) atteint au maximum 1 bar.

13. Balayeuse selon la revendication 12, **caractérisée en ce que** la surpression dans le récipient sous pression (72) atteint au maximum 500 mbar.

14. Balayeuse selon l'une quelconque des revendications précédentes, **caractérisée en ce que** la balayeuse (10) comprend plusieurs soupapes d'air extérieur (88, 90, 92) qui sont disposées respectivement en alignement avec un filtre (44, 46, 48) ou avec une partie de filtre.

15. Balayeuse selon l'une quelconque des revendications précédentes, **caractérisée en ce que** le ou les filtres (44, 46, 48) peuvent être changés côté chambre propre.

16. Balayeuse selon l'une quelconque des revendications précédentes, **caractérisée en ce que** le récipient sous pression (72) est disposé dans une partie de couvercle (64) montée pivotante d'un boîtier (16) de la balayeuse (10).

17. Balayeuse selon l'une quelconque des revendications précédentes, **caractérisée en ce que** le récipient sous pression (72), à l'exception de la paroi (74) comprenant la ou les soupapes d'air extérieur (88, 90, 92), est entouré par une paroi de boîtier (68) de la balayeuse (10).
